# EUROPEAN PATENT APPLICATION

(11) **EP 4 741 794 A1**
(43) Date of publication of application: **13.05.2026**
(21) Application number: 24836053.9
(22) Date of filing: 02.07.2024
(51) Int. Cl.: G01M 99/00

(54) **INFORMATION PROCESSING METHOD AND INFORMATION PROCESSING DEVICE**

(30) Priority: 03.07.2023 JP 2023109624
(71) Applicant: Daikin Industries, Ltd., Osaka-shi, Osaka 530-0001 (JP)
(72) Inventor: SUDO, Katsutaka, Osaka-Shi, Osaka 530-0001 (JP); SUMINAKA, Yukiko, Osaka-Shi, Osaka 530-0001 (JP); HAMASAKI, Junichi, Osaka-Shi, Osaka 530-0001 (JP); OKAYAMA, Hideto, Osaka-Shi, Osaka 530-0001 (JP); SUGIMOTO, Iori, Osaka-Shi, Osaka 530-0001 (JP); NISHIMOTO, Shigeto, Osaka city, Osaka 543-0001 (JP)
(74) Representative: Hoffmann Eitle
(86) International application number: PCT/JP2024/023996
(87) International publication number: WO 2025/009540

(57) **Abstract**

To provide a technique capable of easily monitoring the state of an object. For example, the information processing apparatus 40 according to one embodiment of the present disclosure acquires a time-series measurement signal of the acoustic emission of the mechanical seal 52D, calculates the energy of the acoustic emission based on the measurement signal, extracts a time-series signal of the periodicity-removed component obtained by removing the periodicity component from the time-series signal of the calculated energy or a time-series signal of the periodicity component, and calculates the standard deviation σ2 of the extracted time-series signal of the periodicity-removed component or the standard deviation σ1 of the time-series signal of the periodicity component.

## Description

### Technical Field

The present disclosure relates to an information processing method, and the like.

### Background Art

For example, there is a known technique for measuring high-frequency vibrations of an object and monitoring the state of the object based on the measurement results (see, for example, Patent Document 1).

### Citation List

### Patent Document

[Patent Document 1] Japanese Examined Patent Publication No. H7-11466

### Summary of Invention

### Technical Problem

However, Patent Document 1 requires the use of the maximum value, minimum value, average value, and variance of the effective value of high-frequency vibration per unit time. Accordingly, the number of parameters required for determining the state of the object is relatively large, which may complicate the setting of determination criteria.

The present disclosure is intended to provide a technique that enables easy monitoring of the state of an object.

### Solution to Problem

According to a first aspect of the present disclosure, an information processing method is provided. The information processing method includes:
an acquisition step of acquiring, by an information processing apparatus, a time-series measurement signal of acoustic emission of an object;
an energy calculation step of calculating, by the information processing apparatus, energy of the acoustic emission of the object based on the measurement signal;
a first extraction step of extracting, by the information processing apparatus, either a time-series signal of a first component obtained by removing a second component having periodicity from a time-series signal of the energy, or a time-series signal of the second component; and
a variation calculation step of calculating, by the information processing apparatus, an index value relating to variation of the time-series signal of the first component or the time-series signal of the second component.

According to this embodiment, the information processing apparatus can calculate an index value relating to variation of either a time-series signal of a first component or a time-series signal of a second component of the energy of the acoustic emission of the object. Therefore, for example, the information processing apparatus can relatively easily monitor the state of the object based on the index value. In addition, for example, the information processing apparatus can set a reference value for the index value, thereby enabling easier monitoring of the state of the object based on a comparison between the index value and the reference value.

Further, in a second aspect of the present disclosure, based on the first aspect described above, the information processing method may further include:
a second extraction step of extracting, by the information processing apparatus, the time-series signal of the second component from the time-series signal of the energy,
wherein in the first extraction step, the time-series signal of the first component is extracted, and
wherein in the variation calculation step, index values relating to variation of both the time-series signal of the first component and the time-series signal of the second component are calculated.

Further, in a third aspect of the present disclosure, based on the first aspect described above, the information processing method may further include:
a diagnosis step of diagnosing, by the information processing apparatus, presence or absence of a sign of failure of the object mounted on a predetermined apparatus, based on a trend of a time-dependent change in history of the index value relating to variation of either the time-series signal of the first component or the time-series signal of the second component.

Further, in a fourth aspect of the present disclosure, based on the second aspect described above, the information processing method may further include:
a diagnosis step of diagnosing, by the information processing apparatus, presence or absence of a sign of failure of the object mounted on a predetermined apparatus, based on trends of time-dependent changes in history of the index values relating to variation of both the time-series signal of the first component and the time-series signal of the second component.

Further, in a fifth aspect of the present disclosure, based on the third aspect described above, in the diagnosis step, the object mounted on the predetermined apparatus may be diagnosed as exhibiting a sign of failure when the history of the index value relating to variation of the time-series signal of the second component transitions from an increasing trend with respect to elapsed time to a decreasing trend with respect to elapsed time.

Further, in a sixth aspect of the present disclosure, based on the third aspect described above, in the diagnosis step, the object mounted on the predetermined apparatus is diagnosed as exhibiting a sign of failure when the history of the index value relating to variation of the time-series signal of the first component transitions from a state in which change with respect to elapsed time is relatively small to a state in which increase with respect to elapsed time is relatively large.

Further, in a seventh aspect of the present disclosure, based on the fourth aspect described above, in the diagnosis step, the object mounted on the predetermined apparatus may be diagnosed as exhibiting a sign of failure when the history of the index value relating to variation of the time-series signal of the second component transitions from an increasing trend with respect to elapsed time to a decreasing trend with respect to elapsed time, and subsequently the history of the index value relating to variation of the time-series signal of the first component transitions from a state in which change with respect to elapsed time is relatively small to a state in which increase with respect to elapsed time is relatively large.

Further, in an eighth aspect of the present disclosure, based on the first aspect described above, the information processing method may further include:
a setting step of setting, by the information processing apparatus, a reference value for determining presence or absence of a sign of failure of the object mounted on a predetermined apparatus,
wherein in the acquisition step, a plurality of measurement signals of acoustic emission of the object mounted on the predetermined apparatus may be acquired, the plurality of measurement signals including both measurement signals in a situation before occurrence of failure of the object and measurement signals in a situation after occurrence of failure of the object,
wherein in the energy calculation step, the energy corresponding to each of the plurality of measurement signals acquired in the acquisition step may be calculated,
wherein in the first extraction step, the time-series signal of the first component may be extracted from the time-series signal of the energy corresponding to each of the plurality of measurement signals,
wherein in the variation calculation step, the index value relating to variation of the time-series signal of the first component corresponding to each of the plurality of measurement signals may be calculated, and
wherein in the setting step, a first reference value for the index value relating to variation of the time-series signal of the first component may be set, based on a distribution of the index values relating to variation of the time-series signal of the first component corresponding to the measurement signals in the situation before occurrence of failure of the object and a distribution of the index values relating to variation of the time-series signal of the first component corresponding to the measurement signals in the situation after occurrence of failure of the object among the index values relating to variation of the time-series signal of the first component corresponding to each of the plurality of measurement signals.

Further, in a ninth aspect of the present disclosure, based on the second aspect described above, the information processing method may further include:
a setting step of setting, by the information processing apparatus, reference values for determining presence or absence of a sign of failure of the object mounted on a predetermined apparatus,
wherein in the acquisition step, a plurality of measurement signals of acoustic emission of the object mounted on the predetermined apparatus, the plurality of measurement signals including both measurement signals in a situation before occurrence of failure of the object and measurement signals in a situation after occurrence of failure of the object, are acquired,
wherein in the energy calculation step, the energy corresponding to each of the plurality of measurement signals acquired in the acquisition step may be calculated,
wherein in the first extraction step, the time-series signal of the first component may be extracted from the time-series signal of the energy corresponding to each of the plurality of measurement signals,
wherein in the second extraction step, the time-series signal of the second component obtained by removing the first component from the time-series signal of the energy corresponding to each of the plurality of measurement signals may be extracted,
wherein in the variation calculation step, the index value relating to variation of the time-series signal of the first component corresponding to each of the plurality of measurement signals may be calculated, and the index value relating to variation of the time-series signal of the second component corresponding to each of the plurality of measurement signals may be calculated, and
wherein in the setting step, a first reference value for the index value relating to variation of the time-series signal of the first component and a second reference value for the index value relating to variation of the time-series signal of the second component may be set, based on distributions of the combinations of the index values relating to variation of the time-series signals of the first component and the second component corresponding to the measurement signals in the situation before occurrence of failure of the object and distributions of the combinations of the index values relating to variation of the time-series signals of the first component and the second component corresponding to the measurement signals in the situation after occurrence of failure of the object, among combinations of the index values of the time-series signals of both the first component and the second component corresponding to each of the plurality of measurement signals.

Further, in a tenth aspect of the present disclosure, based on the eighth aspect described above, the plurality of measurement signals may be a collection of measurement signals at different timings for a same predetermined apparatus, and in the setting step, the first reference value may be set, based on the index value relating to variation of a signal of the first component corresponding to the measurement signal at a timing obtained by tracing back a predetermined time from a timing of a first measurement signal recorded after occurrence of failure of the object.

Further, in an eleventh aspect of the present disclosure, based on the ninth aspect described above, the plurality of measurement signals may be a collection of measurement signals at different timings for a same predetermined apparatus, and in the setting step, the first reference value may be set, based on the index value relating to variation of a signal of the first component corresponding to the measurement signal at a timing obtained by tracing back a predetermined time from a timing of a first measurement signal recorded after occurrence of failure of the object, and the second reference value is set, based on the index value relating to variation of a signal of the second component corresponding to the first measurement signal recorded after occurrence of failure of the object.

Further, in a twelfth aspect of the present disclosure, based on any one of the eighth to eleventh aspects described above, in the setting step, the reference value for determining presence or absence of a sign of failure of the object may be set for each group of a plurality of predetermined apparatuses, the groups being classified according to operating conditions of the object.

Further, in a thirteenth aspect of the present disclosure, based on any one of the third to twelfth aspects described above, the predetermined apparatus may be a polymerization reactor, and the object may be a mechanical seal for shaft sealing.

Further, in a fourteenth aspect of the present disclosure, based on the thirteenth aspect,
wherein in the acquisition step, a measurement signal recorded at a timing before a process reaction in the polymerization reactor may be acquired.

Further, in a fifteenth aspect of the present disclosure, an information processing apparatus is provided. The information processing apparatus includes:
an acquisition unit configured to acquire a time-series measurement signal of acoustic emission of an object;
an energy calculation unit configured to calculate energy of the acoustic emission based on the measurement signal;
an extraction unit configured to extract either a time-series signal of a first component obtained by removing a second component having periodicity from a time-series energy signal, or a time-series signal of the second component; and
a variation calculation unit configured to calculate an index value relating to variation of the time-series signal of the first component or the time-series signal of the second component.

### Advantageous Effect of the Invention

The state of the object can readily be monitored according to the above disclosure.

### Brief Description of Drawings

[FIG. 1] FIG. 1 is a diagram illustrating an example of a diagnostic criterion setting system.
[FIG. 2] FIG. 2 is a diagram illustrating an example of a hardware configuration of an information processing apparatus.
[FIG. 3] FIG. 3 includes diagrams illustrating an example of a flow chart for setting diagnostic criterion by the information processing apparatus.
[FIG. 4] FIG. 4 is a diagram illustrating an example of a diagnostic criterion setting method.
[FIG. 5] FIG. 5 is a diagram illustrating an example of a monitoring system.
[FIG. 6] FIG. 6 is a diagram illustrating an example of a flow chart for monitoring the presence or absence of leakage indications in a mechanical seal by the information processing apparatus.
[FIG. 7] FIG. 7 includes diagrams illustrating specific examples of time-dependent change in the history of standard deviations of time series data of a periodicity component and a periodicity-removed component of acoustic emission energy of a mechanical seal.
[FIG. 8] FIG. 8 is a diagram illustrating a second example of a method of monitoring the presence or absence of leakage indications in a mechanical seal.

### Description of Embodiments

Hereinafter, embodiments will be described with reference to the drawings.

### [Overview of Diagnostic Criterion Setting System]

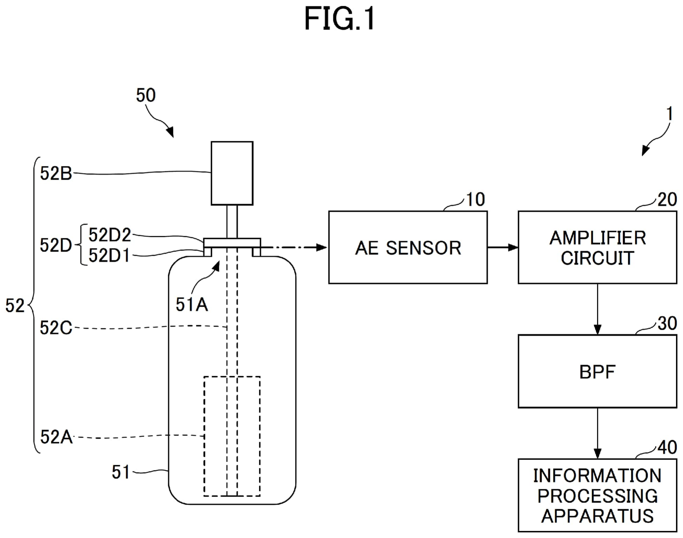

With reference to FIG. 1, an overview of a diagnostic criterion setting system 1 according to the present embodiment will be described.

FIG. 1 is a diagram illustrating an example of the diagnostic criterion setting system 1.

As illustrated in FIG. 1, the diagnostic criterion setting system 1 includes an acoustic emission (AE) sensor 10, an amplifier circuit 20, a band pass filter (BPF) 30, and an information processing apparatus 40.

The diagnostic criterion setting system 1 sets diagnostic criteria with respect to predetermined index values for diagnosing the state of a mechanical seal used for shaft sealing of a polymerization reactor. Specifically, the diagnostic criterion setting system 1 sets diagnostic criteria with respect to index values relating to variations in time series data of the energy of acoustic emission (AE) measurement signals (hereinafter referred to as "AE signals") of the mechanical seal.

The AE sensor 10 measures acoustic emissions from the mechanical seal 52D used for shaft sealing of the polymerization reactor 50 and outputs a signal (AE signal) representing the measurement result.

The polymerization reactor 50 is an experimental machine having the same specifications as a polymerization reactor (e.g., a polymerization reactor 150 described later) to be diagnosed for the state of the mechanical seal. The polymerization reactor 50 includes a reactor body 51 and an agitator 52.

The reactor body 51 is a container for storing a monomer and a solvent to be polymerized. A through hole 51A penetrating between the inside and the outside is provided in the upper part of the reactor body 51.

The agitator 52 agitates the contents stored in the reactor body 51. The agitator 52 includes a rotary blade 52A, a motor 52B, a rotary shaft 52C, and a mechanical seal 52D.

The rotary blade 52A is provided inside the reactor body 51 and rotates around the rotary shaft 52C to agitate the contents of the reactor body 51.

The motor 52B is provided above the outside of the reactor body 51 and rotationally drives the rotary blade 52A through the rotary shaft 52C.

The rotary shaft 52C is provided so as to extend in the vertical direction and mechanically connects the motor 52B outside the reactor body 51 and the rotary blade 52A inside the reactor body 51. The rotary shaft 52C is provided so as to penetrate the through hole 51A of the reactor body 51 at the intermediate portion.

The mechanical seal 52D prevents leakage of the contents from the inside of the reactor body 51 to the outside through the through hole 51A. The mechanical seal 52D includes a fixed ring 52D1 and a rotary ring 52D2.

The fixed ring 52D1 has an annular shape surrounding the outer edge of the through hole 51A in a top view, and is fixed to the outer surface of the reactor body 51.

The rotary ring 52D2 is provided on the rotary shaft 52C and rotates together with the rotary shaft 52C. The rotary ring 52D2 has a disk shape concentric with the rotary shaft 52C and is arranged so as to contact the upper surface of the fixed ring 52D1. Thus, according to the rotation of the rotary shaft 52C, the rotary ring 52D2 slides with its lower surface in contact with the upper surface of the fixed ring 52D1, thereby preventing leakage of the contents through the through hole 51A.

The AE sensor 10 may be provided at any location insofar as the AE signal of the mechanical seal 52D can be acquired. For example, the AE sensor 10 is provided near the fixed ring 52D1 on the outer surface of the reactor body 51. The output of the AE sensor 10 is input to the amplifier circuit 20.

The amplifier circuit 20 amplifies the AE signal output from the AE sensor 10 and outputs the amplified AE signal. The output signal of the amplifier circuit 20 is input to the BPF 30.

The BPF 30 passes and outputs only the component of a predetermined frequency band among the amplified AE signals input from the amplifier circuit 20. Accordingly, the BPF 30 can output an AE signal of the predetermined frequency band. The predetermined frequency band is a frequency band in which a state of the mechanical seal 52D can occur as a characteristic in the AE of the mechanical seal 52D. The predetermined frequency band is, for example, 30 kHz to 200 kHz. The output signal of the BPF 30 is input to the information processing apparatus 40.

The information processing apparatus 40 calculates an index value relating to variation of a time-series signal of acoustic emission (AE) energy based on an AE signal of a predetermined period input from the BPF 30, and sets a diagnostic criterion for the index value based on historical data of the calculated index value. Specifically, during continuous operation of the agitator 52 of the polymerization reactor 50, the information processing apparatus 40 periodically calculates and stores the index value based on the AE signal of a predetermined period until at least leakage of contents occurs at the mechanical seal 52D. In this process, high-load operation of the agitator 52 may be performed such that the load on the mechanical seal 52D becomes higher than that in normal operation. This shortens the period until leakage occurs at the mechanical seal 52D. The information processing apparatus 40 then sets the diagnostic criterion for the index value based on the historical data of the index value until the mechanical seal 52D fails and leakage of contents occurs.

The AE signal used for setting the diagnostic criterion is preferably an AE signal recorded, for example, at a timing prior to the process reaction in the polymerization reactor 50. This is because an AE signal during the process reaction in the polymerization reactor 50 may be superimposed with disturbances caused by the process reaction.

The information processing apparatus 40 is, for example, a server apparatus having relatively high processing capability. For example, the server apparatus may be an on-premise server or a cloud server installed in a facility different from the facility where the polymerization reactor 50 is installed. Alternatively, the server apparatus may be an edge server installed within the facility where the polymerization reactor 50 is installed.

The information processing apparatus 40 may also be a terminal apparatus having lower processing capability than a server apparatus, insofar as it has the capability to execute the required processing. For example, the terminal apparatus may be a stationary terminal apparatus such as a desktop personal computer (PC), or a portable terminal apparatus (mobile terminal) such as a tablet device or a laptop personal computer (PC).

### [Hardware Configuration of Information Processing Apparatus]

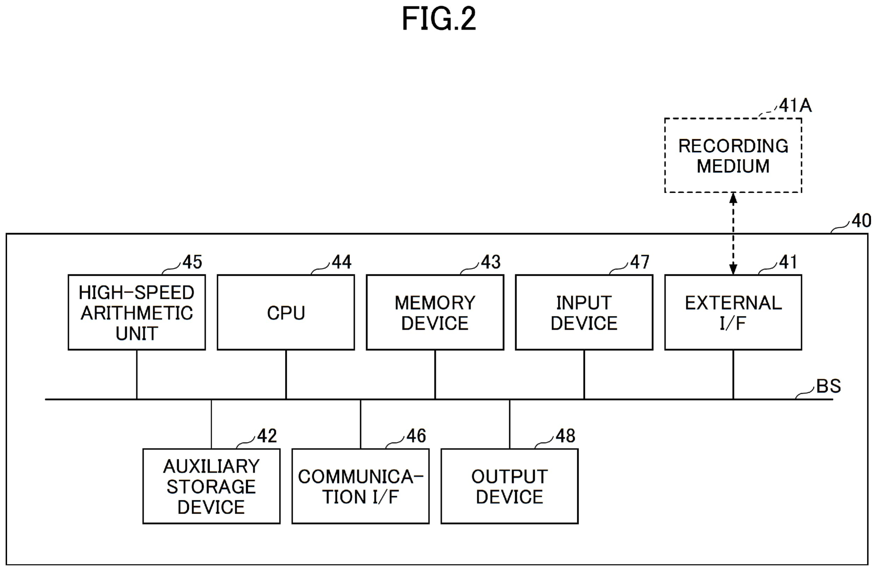

Next, a hardware configuration of the information processing apparatus 40 will be described with reference to FIG. 2.

FIG. 2 is a diagram illustrating an example of a hardware configuration of the information processing apparatus 40.

The functions of the information processing apparatus 40 can be implemented by any hardware, or by a combination of any hardware and software. For example, as illustrated in FIG. 2, the information processing apparatus 40 includes an external interface 41, an auxiliary storage device 42, a memory device 43, a CPU (Central Processing Unit) 44, a high-speed arithmetic unit 45, a communication interface 46, an input device 47, and an output device 48. The external interface 41, the auxiliary storage device 42, the memory device 43, the CPU 44, the high-speed arithmetic unit 45, the communication interface 46, the input device 47, and the output device 48 are connected via a bus BS.

The external interface 41 functions as an interface for reading data from a recording medium 41A and writing data to the recording medium 41A. The recording medium 41A includes, for example, a general-purpose recording medium such as a flexible disk, a CD (Compact Disc), a DVD (Digital Versatile Disc), a BD (Blu-ray^{®} Disc), an SD memory card, and a USB memory. Thus, the information processing apparatus 40 can read various data used in processing through the recording medium 41A, store them in the auxiliary storage device 42, and install programs for implementing various functions.

The auxiliary storage device 42 stores various installed programs and stores files, data, and the like required for various processing. The auxiliary storage device 42 includes, for example, an HDD (Hard Disc Drive), an SSD (Solid State Disc), an EEPROM, a flash memory, and the like.

The memory device 43 reads and stores a program from the auxiliary storage device 42 when an instruction to start the program is given. The memory device 43 includes, for example, DRAM (Dynamic Random Access Memory) and SRAM (Static Random Access Memory).

The CPU 44 executes various programs loaded from the auxiliary storage device 42 to the memory device 43, and realizes various functions relating to the information processing apparatus 40 according to the programs.

The high-speed arithmetic unit 45 is interlocked with the CPU 44 to perform arithmetic processing at a higher speed than that of the CPU 44. The high-speed arithmetic unit 45 includes, for example, GPU (Graphics Processing Unit), ASIC (Application Specific Integrated Circuit), and FPGA (Field-Programmable Gate Array).

Depending on the speed of arithmetic processing required for the information processing apparatus 40, the high-speed arithmetic unit 45 may be omitted.

The communication interface 46 is used as an interface for communicatively connecting to an external device. Thus, the information processing apparatus 40 can capture the output of the BPF 30 through the communication interface 46. Further, the information processing apparatus 40 can acquire, for example, various data and programs used in processing from an external device through the communication interface 46. The communication interface 46 may have a plurality of types of communication interfaces depending on a communication method or the like between connected devices.

The input device 47 receives various inputs from a user of the information processing apparatus 40.

The input device 47 includes, for example, an input device (hereinafter referred to as "operation input device") that receives a mechanical operation input from a user of the information processing apparatus 40. The operation input device includes, for example, a button, a toggle, a lever, a keyboard, a mouse, a touch panel, a touch pad, and the like.

The input device 47 may also include a voice input device capable of receiving voice input from a user of the information processing apparatus 40. The voice input device includes, for example, a microphone capable of collecting the voice of the user of the information processing apparatus 40.

The input device 47 may also include a gesture input device capable of receiving gesture input from a user of the information processing apparatus 40. The gesture input device includes, for example, a camera capable of imaging a gesture of the user.

The input device 47 may also include a biometric input device capable of receiving biometric input from a user of the information processing apparatus 40. The biometric input device includes, for example, a camera capable of acquiring image data including information about a fingerprint or an iris of the user.

The output device 48 outputs information to the user of the information processing apparatus 40.

The output device 48 is, for example, an illumination device or a display device for visually outputting information. The illumination device is, for example, an indicator lamp. The display device is, for example, a liquid crystal display or an organic EL (electroluminescence) display.

The output device 48 may be a sound output device for outputting auditory information. The sound output device is, for example, a buzzer, an alarm or a speaker.

### [Diagnostic Criterion Setting Method]

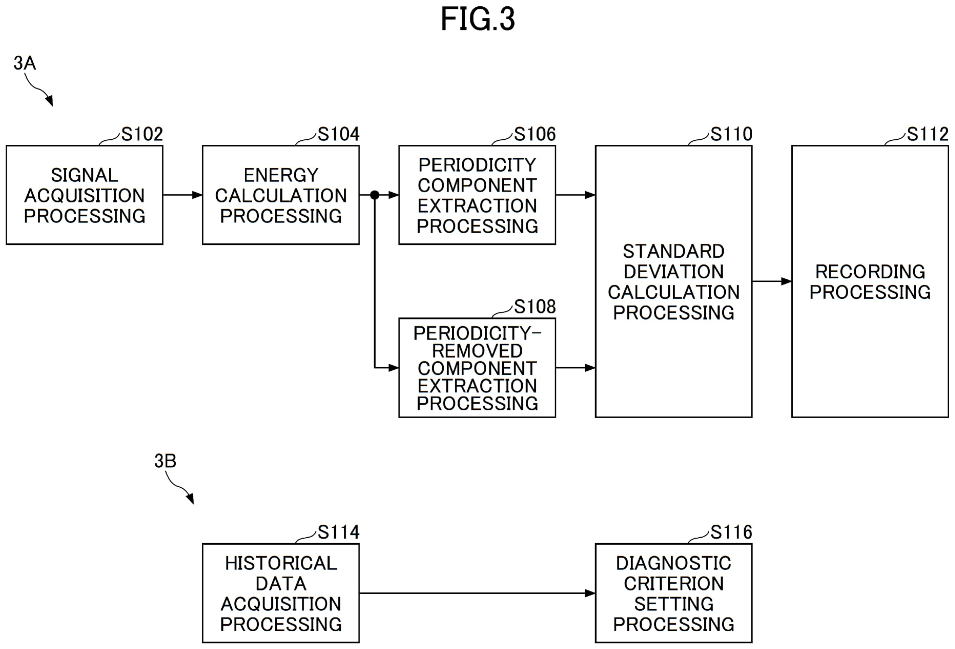

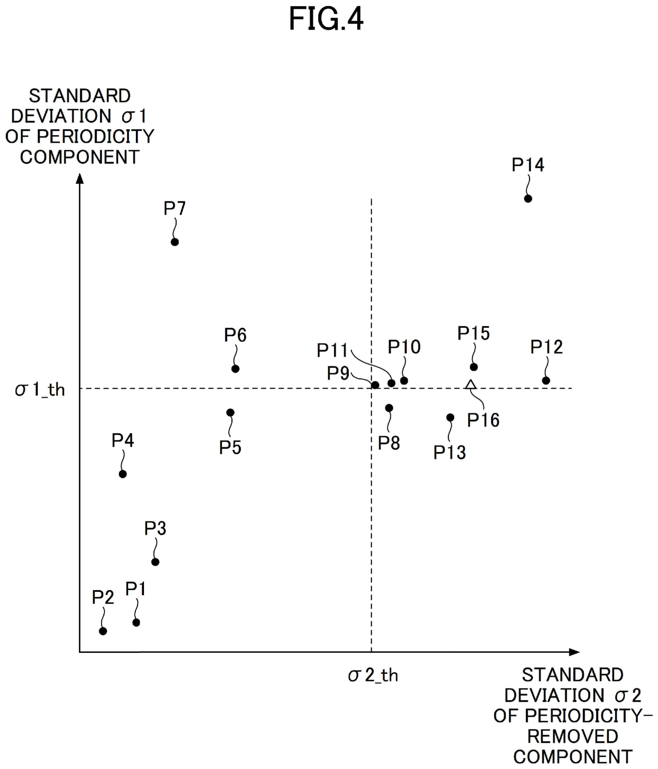

Next, a diagnostic criterion setting method will be described with reference to FIGS. 3 and 4.

FIG. 3 includes diagrams illustrating a flow chart relating to diagnostic criterion setting in the information processing apparatus 40. Specifically, FIG. 3 includes 3A illustrating a preprocessing for diagnostic criterion setting and 3B illustrating a main processing for diagnostic criterion setting.

### <Preprocessing>

Preprocessing is performed, for example, periodically (e.g., every several hours) after the start of operation of the agitator 52 of the polymerization reactor 50. The preprocessing may be executed automatically in response to the arrival of a predetermined timing, or manually in response to a request from a user through the input device 47. The preprocessing may also be executed at a timing before a process reaction in the polymerization reactor 50. This configuration prevents a situation in which disturbance caused by the process reaction in the polymerization reactor 50 overlaps with the AE signal, thereby improving the accuracy of diagnostic criteria set in the main processing described later.

As illustrated in 3A of FIG. 3, in step S102 (signal acquisition processing), the information processing apparatus 40 acquires the time series data of the AE signal of the latest predetermined period fetched from the BPF 30 from the reception buffer or the like.

When step S102 is completed, the information processing apparatus 40 proceeds to step S104.

In step S104 (energy calculation processing), the information processing apparatus 40 calculates the AE energy in the predetermined period based on the time series data of the AE signal, and outputs the time series data of the AE energy in the predetermined period. The AE energy corresponds to the area of the time waveform of the AE signal, and the information processing apparatus 40 can calculate the AE energy by time integration of the AE signal between the target point-in-time and the adjacent point-in-time.

When step S104 is completed, the information processing apparatus 40 proceeds to step S106 and step S108.

In step S106 (periodicity component extraction processing), the information processing apparatus 40 extracts a component having periodicity (periodicity component) from the time series data of the AE energy. For example, with respect to the time series data of the AE energy, the information processing apparatus 40 extracts the time series data of the periodicity component of the AE energy by calculating a moving average of a fixed period immediately preceding each point-in-time of interest. Further, the information processing apparatus 40 may extract the time series data of the periodicity component of the AE energy by using frequency analysis or low-pass filter processing.

In step S108 (periodicity-removed component extraction processing), the information processing apparatus 40 extracts a component (periodicity-removed component) obtained by removing the periodicity component from the time-series data of AE energy. For example, the information processing apparatus 40 may extract the time-series data of the periodicity-removed component of AE energy by converting the time-series data of AE energy into a difference sequence through calculating the difference between a target point-in-time and the immediately preceding point-in-time. Alternatively, the information processing apparatus 40 may extract the time-series data of the periodicity-removed component of AE energy by calculating the difference between the time-series data of AE energy and the time-series data of the periodicity component extracted in step S106.

When steps S106 and 108 are completed, the information processing apparatus 40 proceeds to step S110.

In step S110 (standard deviation calculation processing), the information processing apparatus 40 calculates the standard deviation σ1 as an index value relating to variation of the time series data of the periodicity component of the AE energy extracted in step S106. Similarly, in step S110, the information processing apparatus 40 calculates the standard deviation σ2 as an index value relating to variation of the time series data of the periodicity-removed component of the AE energy extracted in step S108.

When step S110 is completed, the information processing apparatus 40 proceeds to step S112.

Note that the processing in steps S106 and S108 may be processed in series.

In step S112 (recording processing), the standard deviations σ1 and σ2 calculated in step S110 are recorded in the auxiliary storage device 42 as record data together with information representing the time and information representing the presence or absence of leakage in the mechanical seal 52D. The presence or absence of leakage in the mechanical seal 52D is input from the user through the input device 47, for example. The presence or absence of leakage in the mechanical seal 52D may also be automatically determined by applying known image processing techniques or trained models to images captured by a camera that images the mechanical seal 52D. The information processing apparatus 40 thereby causes the auxiliary storage device 42 to retain a group of record data corresponding to historical data of the standard deviations σ1 and σ2 through preprocessing performed periodically.

When the processing of step S112 is completed, the information processing apparatus 40 ends the preprocessing.

### <Main Processing>

The main processing is executed after the occurrence of leakage of contents in the mechanical seal 52D. The main processing may be executed in response to a request from the user through the input device 47, or it may be automatically executed in response to the determination of leakage in the case where the presence of leakage in the mechanical seal 52D is automatically determined.

As illustrated in 3B of FIG. 3, in step S114 (historical data acquisition processing), the information processing apparatus 40 acquires the historical data (record data group) from the auxiliary storage device 42.

When the processing of step S114 is completed, the information processing apparatus 40 proceeds to step S116.

In step S116 (diagnostic criterion setting processing), the information processing apparatus 40 sets diagnostic criteria for the standard deviations σ1 and σ2 based on the historical data of the standard deviations σ1 and σ2. Specifically, the information processing apparatus 40 sets diagnostic criteria for the standard deviations σ1 and σ2 based on the distribution of the combination of the standard deviations σ1 and σ2 corresponding to the situation before the occurrence of the leakage in the mechanical seal 52D and the distribution of the combination of the standard deviations σ1 and σ2 corresponding to the situation after the occurrence of the leakage in the mechanical seal 52D. The set diagnostic criterion is registered in the auxiliary storage device 42.

When the processing in step S116 is completed, the information processing apparatus 40 ends the main processing.

### <Specific Example of Diagnostic criterion Setting Processing>

FIG. 4 is a diagram illustrating an example of a diagnostic criterion setting method. Specifically, FIG. 4 illustrates a graph in which historical data P1 to P16 with standard deviations σ1 and σ2 are plotted, with the vertical axis representing the standard deviation σ1 of the periodicity component of the AE energy and the horizontal axis representing the standard deviation σ2 of the periodicity-removed component of the AE energy.

Incidentally, in the historical data P1 to P16, the smaller the reference number of the data, the older the historical data, and the larger the reference number, the newer the historical data. For example, the historical data P1 represents the oldest historical data, and the historical data P16 represents the newest historical data. Further, the historical data P1 to P15 correspond to the situation before the occurrence of the leakage in the mechanical seal 52D, and the historical data P16 corresponds to the situation after the occurrence of the leakage in the mechanical seal 52D.

As illustrated in FIG. 4, in the historical data P1 to P7, the standard deviation σ1 of the periodicity component of the AE energy increases relatively greatly with the elapsed time. On the other hand, in the historical data P1 to P7, the standard deviation σ2 of the periodicity-removed component of the AE energy changes relatively little with the elapsed time. Accordingly, the overall wear of the sliding surfaces of the fixed ring 52D1 and the rotary ring 52D2 of the mechanical seal 52D is assumed to progress over the time axis corresponding to the historical data P1 to P7.

Thereafter, in the historical data P8 to P16, the standard deviation σ1 of the periodicity component of the AE energy converges to a relatively narrow range of a constant level. On the other hand, in the historical data P8 to P16, the standard deviation σ2 of the periodicity-removed component of the AE energy is relatively larger than that in the historical data P1 to P7. Accordingly, in the time axis corresponding to the historical data P8 to P16, while the overall wear of the sliding surface converges, sudden scratches or the like are assumed to occur, thereby finally causing leakage in the mechanical seal 52D.

As described above, in the mechanical seal 52D, leakage finally occurs because the standard deviation σ2 of the periodicity-removed component of the AE energy is at a relatively high level after the standard deviation σ1 of the periodicity component of the AE energy first increases and converges to a constant level. Therefore, the information processing apparatus 40 can set a diagnostic reference value σ2_th for indicating that the standard deviation σ2 of the periodicity-removed component of the AE energy is at a relatively high level. Therefore, the diagnostic subject (e.g., the information processing apparatus 140 described later) can diagnose that there is a sign of leakage in the mechanical seal when the standard deviation σ2 of the periodicity-removed component of the AE energy of the target mechanical seal is relatively large with respect to the diagnostic reference value σ2_th. When the standard deviation σ2 is relatively large with respect to the diagnostic reference value σ2_th, the standard deviation σ2 may be equal to or larger than the diagnostic reference value σ2_th, or the standard deviation σ2 may be larger than the diagnostic reference value σ2_th.

For example, as illustrated in FIG. 4, the information processing apparatus 40 may set the diagnostic reference value σ2_th between the upper limit of the standard deviation σ2 of the historical data P1 to P7 and the lower limit of the standard deviation σ2 of the historical data P8 to P16. Specifically, the information processing apparatus 40 may set the diagnostic reference value σ2_th corresponding to a value obtained by subtracting a slight margin from the lower limit of the standard deviation σ2 (the standard deviation σ2 of the historical data P9) of the historical data P8 to P16. Further, the information processing apparatus 40 may set the diagnostic reference value σ2_th on the basis of the value of the standard deviation σ2 of the historical data corresponding to a timing obtained by tracing back a predetermined time from the timing of the first historical data P16 after the occurrence of the leakage in the mechanical seal 52D among the historical data P8 to P15. Specifically, the information processing apparatus 40 may set the diagnostic reference value σ2_th corresponding to a value obtained by subtracting a slight margin from the standard deviation σ2 of the historical data at a timing obtained by tracing back a predetermined time from the timing of the historical data P16 among the historical data P8 to P15.

Further, the information processing apparatus 40 may set the diagnostic reference value σ1_th indicating that the standard deviation σ1 of the periodicity component of the AE energy is at a certain level corresponding to the above-described converged state. Thus, when the standard deviation σ2 of the target mechanical seal is large with respect to the diagnostic reference value σ2_th and the standard deviation σ1 is relatively larger than the diagnostic reference value σ1_th, the diagnostic subject can diagnose that there is a sign of leakage in the mechanical seal. Therefore, for example, a case where the standard deviation σ2 is relatively larger than the diagnostic reference value σ2_th in a state where the standard deviation σ1 is relatively small due to the effect of disturbance or the like can be excluded. Thus, the diagnostic subject can more appropriately diagnose whether there is a sign of leakage in the target mechanical seal.

For example, the information processing apparatus 40 sets the diagnostic reference value σ1_th based on the lower limit of the standard deviation σ1 of the historical data P8 to P16 (the standard deviation σ1 of the historical data P13). Specifically, the information processing apparatus 40 may set the diagnostic reference value σ1_th corresponding to a value obtained by subtracting a slight margin from the lower limit of the standard deviation σ1 of the historical data P8 to P16. Further, as illustrated in FIG. 4, the information processing apparatus 40 may set the diagnostic reference value σ1_th based on the value of the standard deviation σ1 of the first historical data P16 after the occurrence of the leakage in the mechanical seal 52D among the historical data P8 to P16. Specifically, the information processing apparatus 40 may set the diagnostic reference value σ1_th corresponding to a value obtained by subtracting a predetermined margin from the value of the standard deviation σ1 of the historical data P16.

As described above, the information processing apparatus 40 can set the diagnostic reference value σ1_th and the diagnostic reference value σ2_th for the standard deviation σ1 of the periodicity component and the standard deviation σ2 of the periodicity-removed component of the time series data of the AE energy, respectively.

### [Overview of Monitoring System]

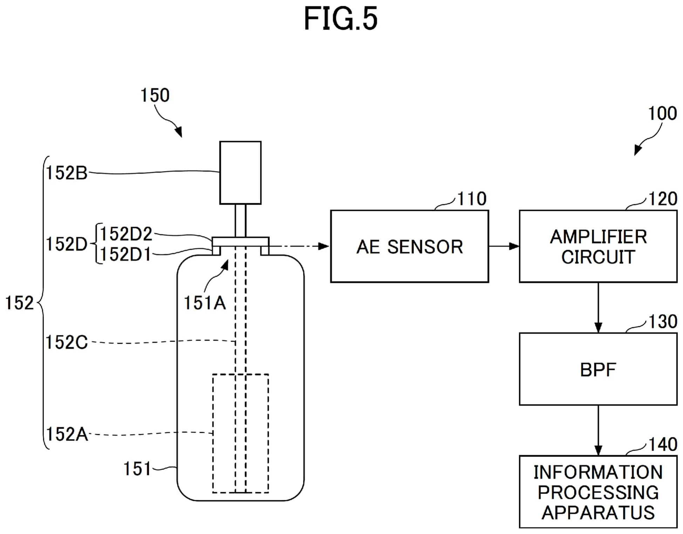

Next, an overview of a monitoring system 100 will be described with reference to FIG. 5.

FIG. 5 is a diagram illustrating an example of the monitoring system 100.

As illustrated in FIG. 5, the monitoring system 100 includes an acoustic emission (AE) sensor 110, an amplifier circuit 120, a band-pass filter (BPF) 130, and an information processing apparatus 140.

The monitoring system 100 monitors the state of the mechanical seal 152D mounted on the polymerization reactor 150 to be monitored. Specifically, the monitoring system 100 monitors the state of the mechanical seal 152D by diagnosing the presence or absence of a sign of leakage in the mechanical seal 152D.

The polymerization reactor 150 is a polymerization reactor having the same specifications as the polymerization reactor 50 described above. Similar to the polymerization reactor 50 described above, the polymerization reactor 150 includes a reactor body 151 and an agitator 152.

The reactor body 151 has the same function and structure as the reactor body 51 described above, and a through hole 151A penetrating between the inside and the outside is provided in the upper part of the reactor body 151.

The agitator 152 has the same function and structure as the agitator 52 described above, and includes a rotary blade 152A, a motor 152B, a rotary shaft 152C, and a mechanical seal 152D.

The mechanical seal 152D includes a fixed ring 152D1 and a rotary ring 152D2 as in the case of the mechanical seal 52D described above.

Since the functions and structures of the rotary blade 152A, the motor 152B, the rotary shaft 152C, and the mechanical seal 152D are the same as those of the rotary blade 52A, the motor 52B, the rotary shaft 52C, and the mechanical seal 52D described above, a detailed description thereof is omitted.

The AE sensor 110 measures AE of the mechanical seal 152D for shaft sealing, which is mounted on the polymerization reactor 150 to be monitored, and outputs a signal (AE signal) representing the measurement result.

The amplifier circuit 120 has the same function as the above-described amplifier circuit 20, and amplifies and outputs the AE signal output from the AE sensor 110. The output signal of the amplifier circuit 120 is input to the BPF 130.

The BPF 130 has the same function as the above-described BPF 30, and passes only a component of a predetermined frequency band of the amplified AE signal input from the amplifier circuit 120 and outputs it. Thus, the BPF 30 can output the AE signal of a predetermined frequency band. The predetermined frequency band is a frequency band in which the state of the mechanical seal 152D can occur as a feature of the AE. The predetermined frequency band is, for example, 30 kHz to 200 kHz as in the case of the above-described BPF 30. The output signal of the BPF 130 is input to the information processing apparatus 140.

The information processing apparatus 140 diagnoses the presence or absence of a sign of leakage in the mechanical seal 152D based on the AE signal input from the BPF 130 for a predetermined period and the diagnostic criterion set by the above-described information processing apparatus 40.

The AE signal used for diagnosing the presence or absence of a sign of leakage in the mechanical seal 152D is preferably, for example, an AE signal recorded at a timing before the process reaction in the polymerization reactor 150. This prevents a situation in which a disturbance caused by the process reaction is superimposed on the AE signal, thereby allowing the information processing apparatus 140 to improve the accuracy of diagnosis.

The information processing apparatus 140 is, for example, a server apparatus having a relatively high processing capability, similar to the information processing apparatus 40 described above. Also, the information processing apparatus 140 may be a terminal apparatus having a lower processing capability than the server apparatus, insofar as it has the capability to execute required processing, similar to the information processing apparatus 40.

The hardware configuration of the information processing apparatus 140 may be the same as that of the information processing apparatus 40 described above. Therefore, the illustration and description of the hardware configuration of the information processing apparatus 140 will be omitted.

### [First Example of Method of Monitoring State of Mechanical Seal]

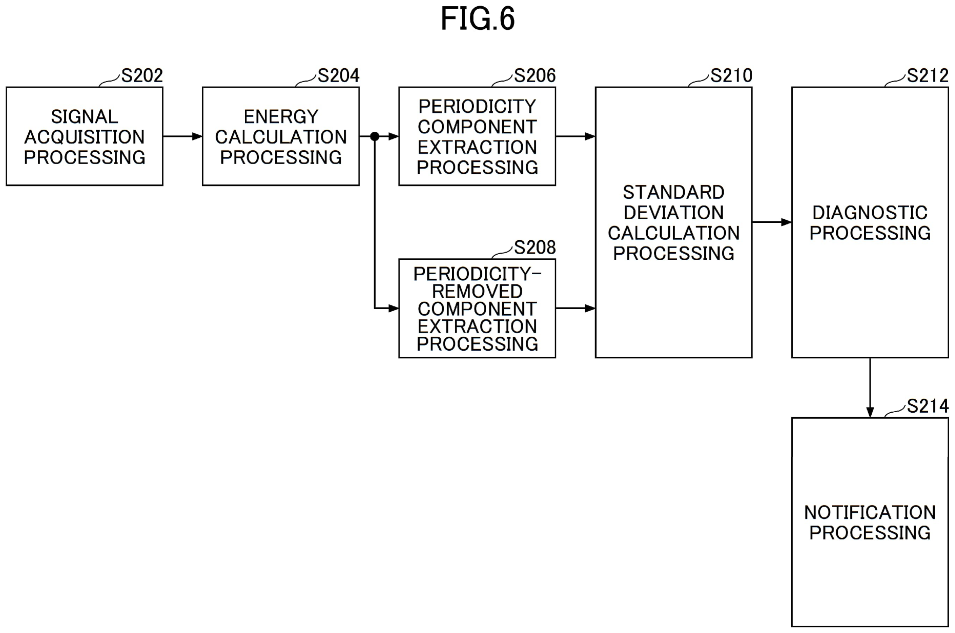

Next, with reference to FIG. 6, a first example of a method of monitoring a state of the mechanical seal 152D will be described.

FIG. 6 is a diagram illustrating an example of a flow chart of the information processing apparatus 140 for monitoring the presence or absence of a sign of leakage in a mechanical seal 152D.

The flow chart of FIG. 6 is automatically executed, for example, at every predetermined processing cycle. Further, the flow chart of FIG. 6 may be manually executed in response to a request from a user through an input device. Further, the flow chart of FIG. 6 may be executed at a timing before a process reaction in the polymerization reactor 150. This prevents a situation in which a disturbance caused by a process reaction in the polymerization reactor 150 is superimposed on the AE signal, thereby allowing the information processing apparatus 140 to improve the accuracy of diagnosis regarding the presence or absence of a sign of leakage in the mechanical seal 152D.

Since the processing contents of steps S202, S204, S206, S208, and S210 are the same as those of steps S102, S104, S106, S108, and S110 executed by the information processing apparatus 40 described above, detailed description thereof may be omitted.

In step S202 (signal acquisition processing), the information processing apparatus 140 acquires the time series data of the AE signal of the latest predetermined period fetched from the BPF 130 from the reception buffer or the like.

When the processing of step S202 is completed, the information processing apparatus 140 proceeds to step S204.

In step S204 (energy calculation processing), the information processing apparatus 140 calculates the AE energy in the predetermined period based on the time series data of the AE signal, and outputs the time series data of the AE energy in the predetermined period.

When step S204 is completed, the information processing apparatus 140 proceeds to step S206 and step S208.

In step S206 (periodicity component extraction processing), the information processing apparatus 140 extracts a periodicity component from the time series data of the AE energy.

In step S208 (periodicity-removed component extraction processing), the information processing apparatus 140 extracts a periodicity-removed component from the time series data of the AE energy.

When steps S206 and S208 are completed, the information processing apparatus 140 proceeds to step S210.

In step S210 (standard deviation calculation processing), the information processing apparatus 140 calculates the standard deviation σ1 of the time series data of the periodicity component of the AE energy extracted in step S206. Similarly, in step S210, the information processing apparatus 140 calculates the standard deviation σ2 of the time series data of the periodicity-removed component of the AE energy extracted in step S208.

When step S210 is completed, the information processing apparatus 140 proceeds to step S212.

It should be noted that the processing in step S206 and step S208 may be performed in series.

In step S212 (diagnostic processing), the information processing apparatus 140 diagnoses the presence or absence of a sign of leakage in the mechanical seal 152D based on the standard deviations σ1 and σ2 calculated in step S210. Specifically, the information processing apparatus 140 diagnoses the presence or absence of a sign of leakage in the mechanical seal 152D based on the standard deviations σ1 and σ2 calculated in step S210 and the diagnostic reference values σ1_th and σ2_th set by the information processing apparatus 40. More specifically, the information processing apparatus 140 diagnoses that there is a sign of leakage in the mechanical seal 152D when the standard deviation σ1 is relatively larger than the diagnostic reference value σ1_th and the standard deviation σ2 is relatively larger than the diagnostic reference value σ2_th. On the other hand, the information processing apparatus 140 diagnoses that there is no sign of leakage in the mechanical seal 152D in other cases.

When step S212 is completed, the information processing apparatus 140 proceeds to step S214.

In step S214 (notification processing), the information processing apparatus 140 notifies the user of the diagnostic result in step S212. For example, the information processing apparatus 140 notifies the user of the diagnostic result by a visual method or an auditory method through an output device such as a display device or a sound output device of the information processing apparatus 140. Further, the information processing apparatus 140 may notify the user of the diagnostic result by transmitting the diagnostic result to a terminal apparatus (user terminal) possessed by the user through a communication interface. Further, the information processing apparatus 140 may notify the user of the diagnostic result through e-mail or SNS (Social Networking Service). Thus, the user of the monitoring system 100 can grasp the diagnostic result of the presence or absence of a sign of leakage in the mechanical seal 152D. Therefore, for example, when the user grasps the diagnostic result of the presence or absence of a sign of leakage in the mechanical seal 152D, the user can adjust the timing of replacement of the mechanical seal 152D in accordance with the order of parts and the operation status of the polymerization reactor 150.

When the processing of step S214 is completed, the information processing apparatus 140 ends the flow chart.

Thus, the information processing apparatus 140 can diagnose the presence or absence of a sign of leakage in the mechanical seal 152D by comparing the standard deviations σ1 and σ2 of the respective time series data of the periodicity component and the periodicity-removed component of the AE energy of the mechanical seal 152D with the diagnostic reference values σ1_th and σ2_th.

### [Second Example of Method of Monitoring State of Mechanical Seal]

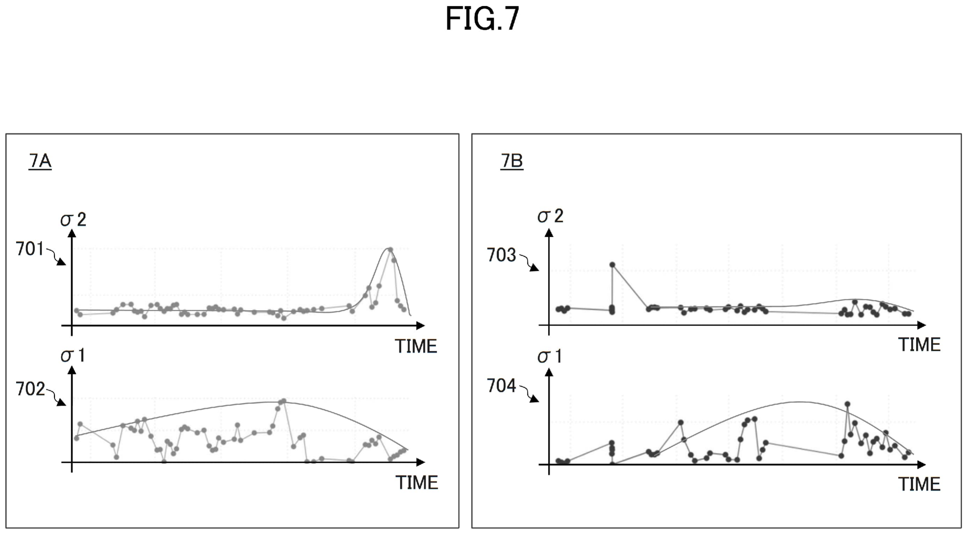

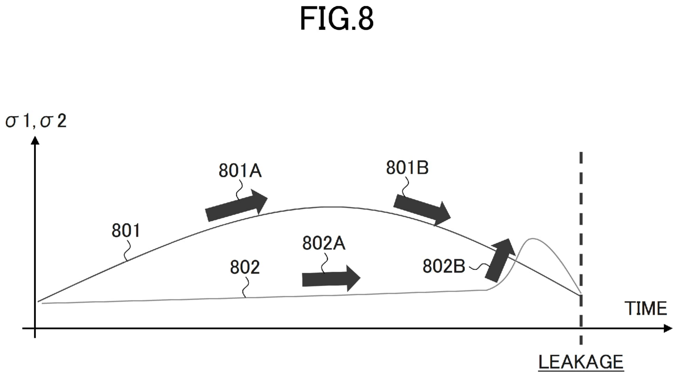

Next, a second example of a method of monitoring a state of the mechanical seal 152D will be described with reference to FIG. 7, and FIG. 8 in addition to FIG. 6.

Hereinafter, description will be made mainly on parts different from the above-described first example of monitoring method, and description of the same or corresponding contents to the above-described first example may be omitted.

### <Overview of Monitoring Method>

FIG. 7 is of diagrams illustrating specific examples of time-dependent change in the history of the standard deviations σ1 and σ2 of the time series data of the periodicity component and the periodicity-removed component, respectively, of the acoustic emission (AE) energy of a mechanical seal 152D.

FIG. 7 includes FIGS. 7A and 7B, which respectively illustrate the time-dependent change in the history of the standard deviations σ1 and σ2 of the time series data of the periodicity component and the periodicity-removed component, respectively, of the AE energy until leakage occurs in the mechanical seal 152D of different polymerization reactors 150.

FIG. 7A includes a graph 701 illustrating the time-dependent change in the history of the standard deviation σ2 of the time series data of the periodicity-removed component of the AE energy of the mechanical seal 152D, and a graph 702 illustrating the time-dependent change in the history of the standard deviation σ1 of the time series data of the periodicity component of the AE energy of the mechanical seal 152D.

FIG. 7B includes a graph 703 illustrating the time-dependent change in the history of the standard deviation σ2 of the time series data of the periodicity-removed component of the AE energy of the mechanical seal 152D, and a graph 704 illustrating the time-dependent change in the history of the standard deviation σ1 of the time series data of the periodicity component of the AE energy of the mechanical seal 152D.

FIG. 8 is a diagram illustrating a second example of a method of monitoring the presence or absence of a sign of leakage in the mechanical seal 152D. Specifically, FIG. 8 is a schematic diagram illustrating a quadratic curve 801 representing the trend of time-dependent change until failure occurs of the standard deviation σ1 of the time series data of the periodicity component of the AE energy of the mechanical seal 152D, and a quadratic curve 802 representing the trend of time-dependent change until failure occurs of the standard deviation σ2 of the time series data of the periodicity-removed component.

The solid lines in the graphs 701 to 704 are quadratic curves approximately representing the time-dependent change in the historical data of the standard deviation σ1 or the standard deviation σ2, respectively.

As illustrated in the graphs 702 and 704, the historical data of the standard deviation σ1 appears to continue to exhibit an increasing trend with respect to elapsed time, subsequently transition to a decreasing trend with respect to elapsed time, and, after that trend continues, thereby causing leakage of the mechanical seal 152D.

Therefore, for example, as illustrated by the quadratic curve 801 in FIG. 8, when the historical data of the standard deviation σ1 transitions from a state 801A of an increasing trend with respect to elapsed time to the state 801B of the decreasing trend with respect to elapsed time, the information processing apparatus 140 can diagnose that there is a sign of the leakage of the mechanical seal 152D.

Further, as illustrated in the graphs 701 and 703, the historical data of the standard deviation σ2 takes a relatively small value and appears to continue to remain in a state in which the change with the elapsed time is relatively small, and then transitions to a state in which the increase with the elapsed time is relatively large. The historical data of the standard deviation σ2 then appears to transition from a state in which the increase with the elapsed time is relatively large to a peak of a relatively large value, subsequently transition to a state in which the decrease with the elapsed time is relatively large, and, after this trend continues, thereby causing leakage of the mechanical seal 152D at a relatively small value.

Therefore, for example, as illustrated by the quadratic curve 802 of FIG. 8, when the history of the standard deviation σ2 transitions from a state 802A in which the change with the elapsed time is relatively small to a state 802B in which the increase with the elapsed time is relatively large, the information processing apparatus 140 can diagnose that there is a sign of leakage of the mechanical seal 152D.

Further, from the comparison of the graphs 701 and 702, and the comparison of the graphs 703 and 704, the timing at which the historical data of the standard deviation σ1 transitions from an increasing trend with elapsed time to a decreasing trend with elapsed time appears earlier, while the timing at which the historical data of the standard deviation σ2 transitions from a state in which the change with elapsed time is relatively small to a state in which the change with elapsed time is relatively large appears later.

Therefore, for example, as illustrated by the quadratic curves 801 and 802 in FIG. 8, the information processing apparatus 140 may diagnose that there is a sign of leakage of the mechanical seal 152D when the history of the standard deviation σ1 transitions from a state 801A in which an increasing trend with respect to elapsed time continues to a state 801B in which a decreasing trend with respect to elapsed time continues, and then the history of the standard deviation σ2 transitions from a state 802A in which a change with respect to elapsed time tends to be relatively small to the state 802B in which an increase with respect to elapsed time tends to be relatively large. Thus, the information processing apparatus 140 can more reliably diagnose the presence or absence of a sign of leakage in the mechanical seal 152D.

### <Flow chart>

The flow chart of the monitoring method according to the present embodiment is illustrated in FIG. 6 as in the case of the above-described first example, and therefore, its illustration is omitted and will be described with reference to FIG. 6.

The processing contents of steps S202, S204, S206, S208, and S210 are the same as those of the above-described first example of the monitoring method, and therefore, their description is omitted.

Upon completion of step S210, the information processing apparatus 140 proceeds to step S212.

In step S212 (diagnostic processing), the information processing apparatus 140 diagnoses the presence or absence of a sign of leakage in the mechanical seal 152D based on the historical data of the standard deviation including the standard deviations σ1 and σ2 calculated in step S210.

Specifically, the information processing apparatus 140 determines whether or not the first monitoring state for the historical data of the standard deviation σ1 has already been satisfied in the previous processing and the second monitoring state for the historical data of the standard deviation σ2 has been satisfied in the current processing. The first monitoring state is a state indicating that the history of the standard deviation transitions from a state in which an increasing trend with respect to elapsed time continues to a state in which a decreasing trend with respect to elapsed time continues. The second monitoring state is a state indicating that the history of the standard deviation σ2 transitions from a state in which the change with respect to elapsed time is relatively small to a state in which the increase with respect to elapsed time is relatively large.

For example, when the first monitoring state is not satisfied in the previous processing, the information processing apparatus 140 determines whether or not the first monitoring state is satisfied. When the first monitoring state is satisfied, the information processing apparatus 140 sets a flag F1 indicating the first monitoring state being satisfied from "0" (not satisfied) to "1" (satisfied), and when the first monitoring state is not satisfied, the flag F1 is maintained at an initial value of "0." Then, the information processing apparatus 140 diagnoses that there is no sign of leakage in the mechanical seal 152D. On the other hand, when the first monitoring state is satisfied in the previous processing, that is, when the flag F1 is "1," the information processing apparatus 140 determines whether or not the second monitoring state is satisfied. When the second monitoring state is satisfied, the information processing apparatus 140 diagnoses that there is a sign of leakage in the mechanical seal 152D, and when the second monitoring state is not satisfied, the information processing apparatus 140 diagnoses that there is no sign of leakage in the mechanical seal 152D.

The first monitoring state is, for example, that the approximation curve (e.g., a quadratic curve) representing the time-dependent change in the history of the standard deviation σ1 continues to decrease in the most recent predetermined period (the first period) in conjunction with continuing to increase in the predetermined period (the second period) that is before the first period. In this case, the information processing apparatus 140 performs, for example, quadratic curve approximation of the historical data of the standard deviation σ1, and acquires the approximation curve.

The second monitoring state is, for example, that the latest value of the approximation curve (e.g., a quadratic curve) representing the time-dependent change in the history of the standard deviation σ2 is not less than a predetermined threshold value TH1, in conjunction with the average value of the entire previous period or the most recent predetermined previous period not being more than the threshold value TH2 (< TH1). In this case, the information processing apparatus 140 performs, for example, quadratic curve approximation of the historical data of the standard deviation σ2, and acquires the approximation curve.

When the processing of step S212 is completed, the information processing apparatus 140 proceeds to step S214.

Since the processing contents of step S214 are the same as those in the case of the first example of the monitoring method described above, a description thereof is omitted.

When the processing of step S214 is completed, the information processing apparatus 140 ends the flow chart.

In this manner, the information processing apparatus 140 can diagnose the presence or absence of a sign of leakage in the mechanical seal 152D, based on the trends of time-dependent changes in the standard deviations σ1 and σ2 of the time-series data of both the periodicity component and the periodicity-removed component of the AE energy of the mechanical seal 152D.

### [Other Embodiments]

Next, other embodiments will be described.

The above-described embodiments may be modified or altered as appropriate.

For example, in the above-described embodiment, the diagnostic criterion may be set in the diagnostic criterion setting system 1 using measurement signals (AE signals) of AE sensors 10 respectively corresponding to a plurality of polymerization reactors 50.

In addition, in the above-described embodiment and examples of modifications and alterations thereof, the diagnostic criterion may be set in the diagnostic criterion setting system 1 by using a polymerization reactor of the same specification actually used for the manufacture of products in a factory or the like instead of or in addition to the polymerization reactor 50 as an experimental machine.

In addition, in the above-described embodiment and the modification and alteration thereof, in the diagnostic criterion setting system 1, the diagnostic criterion may be set by using an experimental apparatus simulating a mechanical seal mounted on a polymerization reactor instead of a polymerization reactor mounted with the mechanical seal.

In addition, in the above-described embodiment and its modifications and alterations, a common diagnostic criterion corresponding to mechanical seals mounted on a plurality of polymerization reactors with different specifications may be set in the diagnostic criterion setting system 1. In this case, the information processing apparatus 40 may set the diagnostic criterion using AE signals of the mechanical seals corresponding to all the target polymerization reactors, or using AE signals of the mechanical seals corresponding to some of the target polymerization reactors. For example, the information processing apparatus 40 may set the diagnostic criterion for each group of polymerization reactors classified according to the operating conditions of the mechanical seals. This groups a plurality of polymerization reactors capable of sharing the diagnostic criterion into one group, and sets a common diagnostic criterion for the plurality of polymerization reactors included in that group. Groups classified according to the operating conditions of the mechanical seals are, for example, groups classified according to the materials of the rotary shafts of the agitators of the polymerization reactors. Such groups may include, for example, a group in which the rotary shaft of the agitator is composed only of machined metal parts, and a group including sintered parts made of glass, resin, or the like.

Further, in the above-described embodiment and its modification and alteration, diagnostic criterion for diagnosing the presence or absence of a sign of leakage in a mechanical seal mounted on an apparatus different from the polymerization reactor may be set in the diagnostic criterion setting system 1.

Further, in the above-described embodiment and its modification and alteration, diagnostic criterion for diagnosing the presence or absence of a sign of failure of an object different from the mechanical seal may be set in the diagnostic criterion setting system 1. For example, the information processing apparatus 40 may set a diagnostic criterion for diagnosing the presence or absence of a sign of failure in a bearing mounted on a predetermined rotating machine based on the AE signal of the bearing.

Further, in the above-described embodiment and its modification and alteration, only one of the diagnostic criterion values σ1_th and σ2_th may be set in the diagnostic criterion setting system 1, and setting of the other diagnostic criterion value may be omitted. In this case, the information processing apparatus 140 diagnoses the presence or absence of a sign of leakage in the mechanical seal 152D based only on the time-series signal of either one of the time-series signal of the periodicity component or the periodicity-removed component of the AE energy of the mechanical seal 152D using either of the set diagnostic criteria values. Further, in this case, either one of the processing of step S106 or the processing of step S108 in FIG. 3 and either one of the processing of step S206 or the processing of step S208 in FIG. 6 may be omitted.

Further, in the above-described embodiment and its modification and alteration, the information processing apparatus 40 may generate a trained model based on historical data of at least one of the standard deviation σ1 or the standard deviation σ2 instead of setting the diagnostic criterion. In this case, the trained model corresponds to a classifier for classifying the presence or absence of a sign of failure of the object based on at least one of the standard deviation σ1 of the periodicity component or the standard deviation σ2 of the periodicity-removed component of the AE energy of the object. Thus, the information processing apparatus 140 can diagnose the presence or absence of a sign of failure of the object using the trained model based on at least one of the standard deviation σ1 of the periodicity component or the standard deviation σ2 of the periodicity-removed component of the AE energy of the object.

Further, in the flow chart (FIG. 6) of the second example of the monitoring method according to the embodiment described above, a sign of leakage in the mechanical seal 152D may be diagnosed based on only one of the standard deviations σ1 and σ2. In this case, either one of the processing of step S206 or the processing of step 208 of FIG. 6 is omitted.

Further, in the embodiment described above and its modification and alteration, the information processing apparatus 40 and the information processing apparatus 140 may be the same information processing apparatus. That is, the diagnostic criterion may be set and the state of the object may be monitored based on the set diagnostic criterion by a common information processing apparatus.

Further, in the embodiment described above and its modification and alteration, at least one of the amplifier circuit 20 or the BPF 30 may be omitted in the diagnostic criterion setting system 1. Similarly, in the monitoring system 100, at least one of the amplifier circuit 120 or the BPF 130 may be omitted.

### [Operation]

Next, operation of the information processing apparatus and the information processing method according to the present embodiment will be described.

In the first aspect of the present embodiment, the information processing apparatus acquires a time-series measurement signal of acoustic emission (AE) of an object. The information processing apparatus is, for example, the above-described information processing apparatus 40 and the information processing apparatus 140. The object is, for example, the above-described mechanical seal 52D and the mechanical seal 152D. The information processing apparatus calculates the AE energy of the object based on the measurement signal. The information processing apparatus extracts the time-series signal of the first component obtained by removing the second component having periodicity from the time-series signal of the energy or the time-series signal of the second component. The first component is, for example, the periodicity-removed component. The second component is, for example, the periodicity component. Then, the information processing apparatus calculates an index value relating to variation of the time-series signal of the first component or the time-series signal of the second component. The index value relating to variation of the time-series signal of the first component is, for example, the standard deviation σ2. The index value relating to variation of the time-series signal of the second component is, for example, the standard deviation σ1.

In the first aspect of the present embodiment, the information processing method includes an acquisition step, an energy calculation step, a first extraction step, and a variation calculation step. The acquisition step is, for example, the above-described step S102 or step S202. The energy calculation step is, for example, the above-described step S104 or step S204. The first extraction step is the above-described step S108, step S208, or step S206. The variation calculation step is the above-described step S110 or step S210. Specifically, in the acquisition step, the information processing apparatus acquires a time-series measurement signal of AE of the object. In the energy calculation step, the information processing apparatus calculates the AE energy of the object based on the measurement signal. In the first extraction step, the information processing apparatus extracts a time-series signal of the first component or a time-series signal of the second component obtained by removing a second component having periodicity from the time-series signal of the energy. In the variation calculation step, the information processing apparatus calculates an index value relating to variation of the time-series signal of the first component or the time-series signal of the second component.

Thus, the information processing apparatus can calculate an index value relating to variation of the time-series signal of the first component or the time-series signal of the second component of the AE energy of the object. Therefore, for example, the information processing apparatus can relatively easily monitor the state of the object based on the index value. Further, for example, the information processing apparatus can set a reference value for the index value, and more easily monitor the state of the object based on the comparison between the index value and the reference value.

In the second aspect of the present embodiment, based on the first aspect described above, the information processing method may include a second extraction step. The second extraction step is, for example, the above-described step S106 and step S206. Specifically, in the first extraction step, a time-series signal of the first component may be extracted. In the second extraction step, the information processing apparatus may extract a time-series signal of the second component from the time-series signal of the energy. In the variation calculation step, an index value relating to variation of both the time-series signal of the first component and the time-series signal of the second component may be calculated.

Thus, the information processing apparatus can calculate an index value relating to variation of both the time-series signals of the first component and the second component of the AE energy of the object. Therefore, for example, the information processing apparatus can relatively easily monitor the state of the object based on both the index values. Further, for example, the information processing apparatus can more easily monitor the state of the object based on the comparison between the index value and the reference value by setting a reference value for each of the index values.

In the third aspect of the present embodiment, based on the first aspect described above, the information processing method may include a diagnosis step of diagnosing, by the information processing apparatus, presence or absence of a sign of failure of the object mounted on a predetermined apparatus, based on a trend of a time-dependent change in history of the index value relating to variation of either the time-series signal of the first component or the time-series signal of the second component.

Thus, the information processing apparatus can easily monitor the presence or absence of a sign of failure of the object mounted on the predetermined apparatus, based on the index value relating to variation of either the time-series signal of the first component or the time-series signal of the second component of the AE energy of the object.

According to the fourth aspect of the present embodiment, based on the second aspect described above, the information processing method may include a diagnosis step of diagnosing, by the information processing apparatus, presence or absence of a sign of failure of the object mounted on a predetermined apparatus, based on trends of time-dependent changes in history of the index values relating to variation of both the time-series signal of the first component and the time-series signal of the second component.

Thus, the information processing apparatus can easily monitor the presence or absence of a sign of failure of the object mounted on the predetermined apparatus based on the index value relating to variation of both the time-series signal of the first component and the time-series signal of the second component of the AE energy of the object.

In the fifth aspect of the present embodiment, based on the third aspect described above, in the diagnosis step, the object mounted on the predetermined apparatus may be diagnosed as exhibiting a sign of failure when the history of the index value relating to variation of the time-series signal of the second component transitions from an increasing trend with respect to elapsed time to a decreasing trend with respect to elapsed time.

Thus, the information processing apparatus can easily monitor the presence or absence of a sign of failure of the object mounted on the predetermined apparatus, based on the index value relating to variation of the time-series signal of the second component of the AE energy of the object.

Further, in the sixth aspect of the present embodiment, based on the third aspect described above, in the diagnosis step, the object mounted on the predetermined apparatus may be diagnosed as exhibiting a sign of failure when the history of the index value relating to variation of the time-series signal of the first component transitions from a state in which change with respect to elapsed time is relatively small to a state in which increase with respect to elapsed time is relatively large.

Thus, the information processing apparatus can easily monitor the presence or absence of a sign of failure of the object mounted on the predetermined apparatus, based on the index value relating to variation of the time-series signal of the first component of the AE energy of the object.

Further, in the seventh aspect of the present embodiment, based on the fourth aspect described above, in the diagnosis step, the object mounted on the predetermined apparatus may be diagnosed as exhibiting a sign of failure when the history of the index value relating to variation of the time-series signal of the second component transitions from an increasing trend with respect to elapsed time to a decreasing trend with respect to elapsed time, and subsequently the history of the index value relating to variation of the time-series signal of the first component transitions from a state in which change with respect to elapsed time is relatively small to a state in which increase with respect to elapsed time is relatively large.

Thus, the information processing apparatus can easily monitor the presence or absence of a sign of failure of the object mounted on the predetermined apparatus, based on the index value relating to variation of both the time-series signal of the first component and the time-series signal of the second component of the AE energy of the object.

Further, in the eighth aspect of the present embodiment, based on the first aspect described above, the information processing method may include a setting step. The setting step is, for example, the above-described step S116. Specifically, in the setting step, the information processing apparatus sets a reference value for determining the presence or absence of a sign of failure of the object mounted on the predetermined apparatus. The information processing apparatus is, for example, the above-described information processing apparatus 40. The predetermined apparatus is, for example, the above-described polymerization reactor 50. The object is, for example, the above-described mechanical seal 52D.

Further, in the acquisition step, a plurality of measurement signals of acoustic emission (AE) of the object mounted on the predetermined apparatus may be acquired, the plurality of measurement signals including both measurement signals in a situation before occurrence of failure of the object and measurement signals in a situation after occurrence of failure of the object.

Further, in the energy calculating step, the energy corresponding to each of the plurality of measurement signals acquired in the acquisition step may be calculated.

Further, in the first extracting step, the time-series signal of the first component may be extracted from a time-series signal of the energy corresponding to each of the plurality of measurement signals.

Further, in the variation calculating step, the index value relating to variation of the time-series signal of the first component corresponding to each of the plurality of measurement signals may be calculated.

Then, in the setting step, a first reference value for the index value relating to variation of the time-series signal of the first component may be set, based on a distribution of the index values relating to variation of the time-series signal of the first component corresponding to the measurement signals in the situation before occurrence of failure of the object and a distribution of the index values relating to variation of the time-series signal of the first component corresponding to the measurement signals in the situation after occurrence of failure of the object, among the index values relating to variation of the time-series signal of the first component corresponding to each of the plurality of measurement signals. The first reference value is, for example, the diagnostic reference value σ2_th.

Thus, the information processing apparatus can set a first reference value for the index value relating to variation of the time-series signal of the first component of the AE energy for determining the presence or absence of a sign of the failure of the object. Therefore, the information processing apparatus can monitor the presence or absence of a sign of the failure of the object, based on a comparison between the index value relating to variation of the time-series signal of the first component of the AE energy and the first reference value.

Further, in the ninth aspect of the present embodiment, based on the second aspect described above, the information processing apparatus may include a setting step. Specifically, in the setting step, a reference value for determining the presence or absence of a sign of the failure of the object mounted on the predetermined apparatus may be set.

Further, in the acquisition step, a plurality of measurement signals of the AE of the object mounted on the predetermined apparatus may be acquired, the plurality of measurement signals including both the measurement signal in a state before the occurrence of the failure of the object and the measurement signal in a state after the occurrence of the failure of the object.

Further, in the energy calculating step, the energy corresponding to each of the plurality of measurement signals acquired in the acquisition step may be calculated.

Further, in the first extraction step, the time-series signal of the first component may be extracted from the time-series signal of the energy corresponding to each of the plurality of measurement signals.

Further, in the second extraction step, the time-series signal of the second component obtained by removing the first component from the time-series signal of the energy corresponding to each of the plurality of measurement signals may be extracted.

Further, in the variation calculation step, the index value relating to variation of the time-series signal of the first component corresponding to each of the plurality of measurement signals may be calculated, and the index value relating to variation of the time-series signal of the second component corresponding to each of the plurality of measurement signals may be calculated.

Then, in the setting step, a first reference value for the index value relating to variation of the time-series signal of the first component and a second reference value for the index value relating to variation of the time-series signal of the second component may be set, based on distributions of the combinations of the index values relating to variation of the time-series signals of the first component and the second component corresponding to the measurement signals in the situation before occurrence of failure of the object and distributions of the combinations of the index values relating to variation of the time-series signals of the first component and the second component corresponding to the measurement signals in the situation after occurrence of failure of the object, among combinations of the index values of the time-series signals of both the first component and the second component corresponding to each of the plurality of measurement signals. The first reference value and the second reference value are, for example, the diagnostic reference value σ2_th and the diagnostic reference value σ1_th, respectively.

Thus, the information processing apparatus can set the first reference value and the second reference value for the index value relating to variation of the signal in the time series of the first component and the second component of the AE energy, which are the first reference value and the second reference value for determining the presence or absence of a sign of failure of the object. Therefore, the information processing apparatus can monitor the presence or absence of a sign of failure of the object, based on a comparison of the index value relating to variation of the signal in the time series of the first component and the second component of the AE energy with the first reference value and the second reference value.

Further, in the tenth aspect of the present embodiment, based on the eighth aspect described above, the plurality of measurement signals may be a collection of the measurement signals at different timings for the same predetermined apparatus.

Then, in the setting step, the first reference value may be set, based on the index value relating to variation of a signal of the first component corresponding to the measurement signal at a timing obtained by tracing back a predetermined time from a timing of a first measurement signal recorded after occurrence of failure of the object.

Thus, the information processing apparatus can appropriately set the first reference value for determining the presence or absence of a sign of occurrence of failure of the object, based on a time-dependent change of the index value relating to variation of the time-series signal of the first component of the AE energy of the object for the same predetermined apparatus.

Further, in an eleventh aspect of the present embodiment, based on the ninth aspect described above, the plurality of measurement signals may be a collection of measurement signals of the same predetermined apparatus at different timings.

Then, in the setting step, the first reference value may be set, based on the index value relating to variation of a signal of the first component corresponding to the measurement signal at a timing obtained by tracing back a predetermined time from a timing of a first measurement signal recorded after occurrence of failure of the object, and the second reference value may be set, based on the index value relating to variation of a signal of the second component corresponding to the first measurement signal recorded after occurrence of failure of the object.

Thus, the information processing apparatus can appropriately set the first reference value and the second reference value for determining the presence or absence of a sign of occurrence of failure of the object, based on time-dependent changes of the index value relating to variation of the time-series signal of the first component and the second component of the AE energy of the object for the same predetermined apparatus.

Further, in the twelfth aspect of the present embodiment, based on any one of the eighth to eleventh aspects described above, in the setting step, the reference value for determining the presence or absence of a sign of the failure of the object may be set for each group of a plurality of predetermined apparatuses, the groups being classified according to operating conditions of the object.

Thus, the information processing apparatus can set a reference value for each group of a plurality of predetermined apparatuses according to the operating conditions thereof. Therefore, the information processing apparatus can improve the accuracy of determining the presence or absence of a sign of failure of the object for each group of a plurality of predetermined apparatuses.

Further, in the thirteenth aspect of the present embodiment, based on any one of the third to twelfth aspects described above, the predetermined apparatus may be a polymerization reactor. The object may be a mechanical seal for shaft sealing.

Thus, the information processing apparatus can set a reference value for determining the presence or absence of a sign of failure of leakage of the contents of the mechanical seal for shaft sealing mounted on the polymerization reactor.

Further, in the fourteenth aspect of the present embodiment, based on the thirteenth aspect described above, a measurement signal recorded at a timing before a process reaction in the polymerization reactor may be acquired in the acquisition step.

The information processing apparatus can prevent disturbance caused by the effect of a process reaction inside the polymerization reactor from being superimposed on the measurement signal, thereby improving the accuracy of setting the reference value.

Although the embodiments have been described above, it will be understood that various changes in form and details are possible without departing from the object and scope of the claims. Various variations and improvements such as combinations and substitutions with some or all of the other embodiments are possible.

Finally, the present international application is based upon and claims priority to Japanese Patent Application no. 2023-109624 filed on July 3, 2023, the entire contents of which are incorporated herein by reference.

### Reference Signs List

- 1 -: diagnostic criterion setting system
- 10 -: acoustic emission sensor
- 40 -: information processing apparatus
- 50 -: polymerization reactor
- 51 -: reactor body
- 52 -: agitator
- 52D -: mechanical seal
- 52D1 -: fixed ring
- 52D2 -: rotary ring
- 100 -: monitoring system
- 110 -: acoustic emission (AE) sensor
- 140 -: information processing apparatus
- 150 -: polymerization reactor
- 151 -: reactor body
- 152 -: agitator
- 152D -: mechanical seal
- 152D1 -: fixed ring
- 152D2 -: rotary ring

## Claims

1. An information processing method comprising:
an acquisition step of acquiring, by an information processing apparatus, a time-series measurement signal of acoustic emission of an object;
an energy calculation step of calculating, by the information processing apparatus, energy of the acoustic emission of the object based on the measurement signal;
a first extraction step of extracting, by the information processing apparatus, either a time-series signal of a first component obtained by removing a second component having periodicity from a time-series signal of the energy, or a time-series signal of the second component; and
a variation calculation step of calculating, by the information processing apparatus, an index value relating to variation of the time-series signal of the first component or the time-series signal of the second component.

2. The information processing method according to claim 1, further comprising:
a second extraction step of extracting, by the information processing apparatus, the time-series signal of the second component from the time-series signal of the energy,
wherein in the first extraction step, the time-series signal of the first component is extracted, and
wherein in the variation calculation step, index values relating to variation of both the time-series signal of the first component and the time-series signal of the second component are calculated.

3. The information processing method according to claim 1, further comprising:
a diagnosis step of diagnosing, by the information processing apparatus, presence or absence of a sign of failure of the object mounted on a predetermined apparatus, based on a trend of a time-dependent change in history of the index value relating to variation of either the time-series signal of the first component or the time-series signal of the second component.

4. The information processing method according to claim 2, further comprising:
a diagnosis step of diagnosing, by the information processing apparatus, presence or absence of a sign of failure of the object mounted on a predetermined apparatus, based on trends of time-dependent changes in history of the index values relating to variation of both the time-series signal of the first component and the time-series signal of the second component.

5. The information processing method according to claim 3,
wherein in the diagnosis step, the object mounted on the predetermined apparatus is diagnosed as exhibiting a sign of failure when the history of the index value relating to variation of the time-series signal of the second component transitions from an increasing trend with respect to elapsed time to a decreasing trend with respect to elapsed time.

6. The information processing method according to claim 3,
wherein in the diagnosis step, the object mounted on the predetermined apparatus is diagnosed as exhibiting a sign of failure when the history of the index value relating to variation of the time-series signal of the first component transitions from a state in which change with respect to elapsed time is relatively small to a state in which increase with respect to elapsed time is relatively large.

7. The information processing method according to claim 4,
wherein in the diagnosis step, the object mounted on the predetermined apparatus is diagnosed as exhibiting a sign of failure when the history of the index value relating to variation of the time-series signal of the second component transitions from an increasing trend with respect to elapsed time to a decreasing trend with respect to elapsed time, and subsequently the history of the index value relating to variation of the time-series signal of the first component transitions from a state in which change with respect to elapsed time is relatively small to a state in which increase with respect to elapsed time is relatively large.

8. The information processing method according to claim 1, further comprising:
a setting step of setting, by the information processing apparatus, a reference value for determining presence or absence of a sign of failure of the object mounted on a predetermined apparatus,
wherein in the acquisition step, a plurality of measurement signals of acoustic emission of the object mounted on the predetermined apparatus are acquired, the plurality of measurement signals including both measurement signals in a situation before occurrence of failure of the object and measurement signals in a situation after occurrence of failure of the object,
wherein in the energy calculation step, the energy corresponding to each of the plurality of measurement signals acquired in the acquisition step is calculated,
wherein in the first extraction step, the time-series signal of the first component is extracted from the time-series signal of the energy corresponding to each of the plurality of measurement signals,
wherein in the variation calculation step, the index value relating to variation of the time-series signal of the first component corresponding to each of the plurality of measurement signals is calculated, and
wherein in the setting step, a first reference value for the index value relating to variation of the time-series signal of the first component is set, based on a distribution of the index values relating to variation of the time-series signal of the first component corresponding to the measurement signals in the situation before occurrence of failure of the object and a distribution of the index values relating to variation of the time-series signal of the first component corresponding to the measurement signals in the situation after occurrence of failure of the object, among the index values relating to variation of the time-series signal of the first component corresponding to each of the plurality of measurement signals.

9. The information processing method according to claim 2, further comprising:
a setting step of setting, by the information processing apparatus, reference values for determining presence or absence of a sign of failure of the object mounted on a predetermined apparatus,
wherein in the acquisition step, a plurality of measurement signals of acoustic emission of the object mounted on the predetermined apparatus are acquired, the plurality of measurement signals including both measurement signals in a situation before occurrence of failure of the object and measurement signals in a situation after occurrence of failure of the object,
wherein in the energy calculation step, the energy corresponding to each of the plurality of measurement signals acquired in the acquisition step is calculated,
wherein in the first extraction step, the time-series signal of the first component is extracted from the time-series signal of the energy corresponding to each of the plurality of measurement signals,
wherein in the second extraction step, the time-series signal of the second component obtained by removing the first component from the time-series signal of the energy corresponding to each of the plurality of measurement signals is extracted,
wherein in the variation calculation step, the index value relating to variation of the time-series signal of the first component corresponding to each of the plurality of measurement signals is calculated, and the index value relating to variation of the time-series signal of the second component corresponding to each of the plurality of measurement signals is calculated, and
wherein in the setting step, a first reference value for the index value relating to variation of the time-series signal of the first component and a second reference value for the index value relating to variation of the time-series signal of the second component are set, based on distributions of the combinations of the index values relating to variation of the time-series signals of the first component and the second component corresponding to the measurement signals in the situation before occurrence of failure of the object and distributions of the combinations of the index values relating to variation of the time-series signals of the first component and the second component corresponding to the measurement signals in the situation after occurrence of failure of the object, among combinations of the index values of the time-series signals of both the first component and the second component corresponding to each of the plurality of measurement signals.

10. The information processing method according to claim 8,
wherein the plurality of measurement signals are a collection of measurement signals at different timings for a same predetermined apparatus, and
wherein in the setting step, the first reference value is set, based on the index value relating to variation of a signal of the first component corresponding to the measurement signal at a timing obtained by tracing back a predetermined time from a timing of a first measurement signal recorded after occurrence of failure of the object.

11. The information processing method according to claim 9,
wherein the plurality of measurement signals are a collection of measurement signals at different timings for a same predetermined apparatus, and
wherein in the setting step, the first reference value is set, based on the index value relating to variation of a signal of the first component corresponding to the measurement signal at a timing obtained by tracing back a predetermined time from a timing of a first measurement signal recorded after occurrence of failure of the object, and the second reference value is set, based on the index value relating to variation of a signal of the second component corresponding to the first measurement signal recorded after occurrence of failure of the object.

12. The information processing method according to any one of claims 8 to 11,
wherein in the setting step, the reference value for determining presence or absence of a sign of failure of the object is set for each group of a plurality of predetermined apparatuses, the groups being classified according to operating conditions of the object.

13. The information processing method according to any one of claims 3 to 12,
wherein the predetermined apparatus is a polymerization reactor, and the object is a mechanical seal for shaft sealing.

14. The information processing method according to claim 13,
wherein in the acquisition step, a measurement signal recorded at a timing before a process reaction in the polymerization reactor is acquired.

15. An information processing apparatus comprising:
an acquisition unit configured to acquire a time-series measurement signal of acoustic emission of an object;
an energy calculation unit configured to calculate energy of the acoustic emission based on the measurement signal;
an extraction unit configured to extract either a time-series signal of a first component obtained by removing a second component having periodicity from a time-series energy signal, or a time-series signal of the second component; and
a variation calculation unit configured to calculate an index value relating to variation of the time-series signal of the first component or the time-series signal of the second component.
